# EUROPEAN PATENT SPECIFICATION

(11) **EP 0 601 758 B1**
(45) Date of publication and mention of the grant of the patent: **15.10.1997**
(21) Application number: 93309502.8
(22) Date of filing: 29.11.1993
(51) Int. Cl.: G03G 15/01, H04N 1/46

(54) **Color xerographic printing system with multiple wavelength, single optical system ROS and multiple layer photoreceptor**
Farbxirographisches Drucksystem mit mehrfachen Wellenlängen, einzelnes optisches Ros System und Mehrlagenphotorezeptor
Système d'impression xérographique en couleur avec des longeurs d'onde multiples, système optique unique et photorécepteur multicouche

(30) Priority: 09.12.1992 US 987885; 09.12.1992 US 987886
(43) Date of publication of application: 15.06.1994
(73) Proprietor: XEROX CORPORATION, Rochester New York 14644 (US)
(72) Inventor: Kovacs, Gregory J., Sunnyvale, California 94086 (US); Connell, G.A. Neville, Cupertino, California 95014 (US)
(74) Representative: Johnson, Reginald George

(56) References cited:
- WO-A-91/06175
- GB-A- 2 251 699
- US-A- 4 578 331
- US-A- 5 115 304
- PATENT ABSTRACTS OF JAPAN vol. 17, no. 187 (P-1520) & JP-A-04 338 763 (RICOH) 26 November 1992

## Description

This invention relates to a single pass color xerographic printing system.

In xerographic printing (also called electrophotographic printing), a latent image is formed on a charged photoreceptor, usually by raster sweeping a modulated laser beam across the photoreceptor. The latent image is then used to create a permanent image by transferring and fusing toner that was electrostatically attracted to the latent image, onto a recording medium, usually plain paper. While other methods are known, the most common method of sweeping the laser beam is to deflect it from a rotating mirror. A multifaceted, rotating polygon mirror having a set of related optics can sweep the beam or sweep several beams simultaneously. Rotating polygon mirrors and their related optics are so common that they are generically referred to as ROSs (Raster Output Scanners), while printers that sweep several beams simultaneously are referred to as multispot printers.

When a xerographic printer prints in two or more colors, it requires a separate latent image for each color printed, called a system color. Color prints are currently produced by sequentially transferring overlapped images of each system color onto an intermediate transfer belt (ITB) that is passed multiple times, once for each system color, over the photoreceptor. The built-up image is then transferred to a single recording medium and fused. Such printers are called multiple pass printers.

Conceptually, one can build up multiple colors on a photoreceptor or intermediate transfer belt that is passed through the system only once, in a single pass, by using a sequence of multiple xerographic stations, one for each system color. The built-up image on the photoreceptor or ITB can be transferred to a recording medium in a single pass. Additionally, tandem xerographic stations can sequentially transfer images directly to the recording medium in a single pass. Such a printer, called a multistation printer, would have a greater output than a multipass printer operating at the same raster sweep speed because the rasters for each color are operating simultaneously in the single pass printer. However, the introduction of multistation printers has been delayed by 1) cost problems, at least partially related to the cost of multiple xerographic stations and the associated ROSs, and 2) image quality problems, at least partially related to the difficulty of producing similar spots at each imaging station and subsequently registering (overlapping) the latent images on the photoreceptor or transfer/recording medium.

In the practice of conventional bi-level xerography, it is the general procedure to form electrostatic latent images on a xerographic surface by first uniformly charging a charge retentive surface such as a photoreceptor. The charged area is selectively dissipated in accordance with a pattern of activating radiation corresponding to desired images. The selective dissipation of the charge leaves a latent charge pattern on the imaging surface corresponding to the areas not exposed by radiation.

This charge pattern is made visible by developing it with toner by passing the photoreceptor past a single developer housing. The toner is generally a colored powder which adheres to the charge pattern by electrostatic attraction. The developed image is then fixed to the imaging surface or is transferred to a receiving substrate such as plain paper to which it is fixed by suitable fusing techniques.

Modern business and computer needs often make it advantageous and desirable to reproduce or print originals which contain two or more colors. It is sometimes important that the copy reproduced or printed also contain two colors.

Several useful methods are known for making copies having plural colors. Some of these methods make high quality images, however, there is need for improvements. In particular, it is desirable to be able to print images having two or more highlight colors rather than being limited to a single highlight color. It is also desirable to be able to produce such images in a single pass of the photoreceptor or other charge retentive surface past the printing process areas or stations.

In tri-level, highlight color imaging, unlike conventional xerography as well as other printing processes, the image area contains three voltage levels which correspond to two image areas and to a background voltage area. One of the image areas corresponds to non-discharged (i.e. charged) areas of the photoreceptor while the other image areas correspond to discharged areas of the photoreceptor. These three voltage levels can be developed to print, for example, black, white, and a single color.

The concept of tri-level, highlight color xerography is described in U.S. Pat. No. 4,078,929. This patent teaches the use of tri-level xerography as a means to achieve single-pass highlight color imaging. The xerographic contrast on the charge retentive surface or photoreceptor is divided three, rather than two, ways as is the case in conventional xerography. The photoreceptor is charged, typically to 900 v. It is exposed imagewise, such that one image corresponding to charged image areas (which are subsequently developed by charged-area development, i.e. CAD) stays at the full photoreceptor potential (V cad). The other image is exposed to discharge the photoreceptor to its residual potential, i.e. V dad (typically 100 v) which corresponds to discharged area images that are subsequently developed by discharged-area development (DAD) and the background areas exposed such as to reduce the photoreceptor potential to halfway between the V cad and V dad potentials, (typically 500 v) and is referred to as V white. The CAD developer is typically biased about 100 v closer to V cad than V white (about 600 v), and the DAD developer system is biased about 100 v closer to V dad than V white (about 400 v).

JP-A-04 338 763 (D1) discloses a color image forming device having a four layer photosensitive member, each layer of which is sensitive to light of a different wavelength and each layer is formed in the order of a particular light wavelength. The photosensitive member is first charged with one polarity (positive or negative) while being uniformly exposed to light having three of the four selected wavelengths. The photosensitive member is charged a second time with a polarity opposite the first charge while being exposed to light having two of the three previous wavelengths used in the first exposure. The photosensitive member is charged a third time to a polarity of the first charge while being uniformly exposed to light of one of the previous two wavelengths used in the second charge. The photosensitive member is next charged to a polarity opposite the previous charging without exposure to light (charged in the dark). The photosensitive member is then image exposed to the four wavelengths of modulated light either simultaneously or successively, so that the latent images are formed on the respective layer of the photosensitive member. One of the latent images is developed and the latent image on that layer erased by uniform exposure with the wavelength for that layer. The development and uniform exposure for each of the remaining latent images is repeated in a similar way for each remaining separate color of toner using a light with the appropriate wavelength for each of the exposures.

WO-A-91 06175 (D2)discloses a laser printer for color imaging which uses three diode lasers, each of which emits a light beam at a different wavelength. Each of the light beams passes along a separate channel to a pair of dichroic plates which combine the three beams into a single combined beam. The combined beam is scanned by a polygon onto a receiving medium which is sensitive to infrared.

It is an object of this invention to provide an improved single pass, color, xerographic printing system.

The present invention provides a xerographic printing system as claimed in claim 1.

In one embodiment of the present invention, a single pass color xerographic printing system with a single polygon, single optical system Raster Output Scanning (ROS) system has a multiple wavelength laser diode source for the ROS which images the multiple beams at a single station as closely spaced spots on a multiple layer photoreceptor with each photoreceptor layer sensitive to or accessible to only one of the multiple wavelengths. Each imaged spot on the photoreceptor is discharged to a particular level which depends on the wavelengths of light which have been used to expose the imaged spot. Each voltage level on the photoreceptor is then developed with a different toner at successive development stations by appropriate choice of toner polarity and development biasing techniques. In this way a highlight color or full color image can be made at high speed in a single pass with a compact single optical system and single photoreceptor at a single imaging station addressed by a compact diode laser light source.

In another embodiment of the present invention, a single pass color xerographic printing system with a single polygon, single optical system Raster Output Scanning (ROS) system has a dual wavelength laser diode source for the ROS which images the dual beams at a single station as closely spaced spots on a dual layer photoreceptor with each photoreceptor layer sensitive to only one of the two wavelengths or each accessible to only one of the two wavelengths. Each layer of the photoreceptor is independently addressable and dischargeable by one of the two wavelengths of the laser diode light source. The laser diode light source may be either hybrid or monolithic. Alternate light sources which allow two wavelength laser beams to pass through the same single optics ROS may also be used. After exposure each of the resultant voltage levels on the photoreceptor is then developed with a different toner at successive development stations by appropriate choice of toner polarity and development biasing techniques. The ability to independently discharge each layer in the photoreceptor on imaging and to effect imagewise discharge by blanket exposure between development steps allows a 3-color image to be made at high speed in a single pass.

In that embodiment, one photoreceptor layer may comprise benzimidazole perylene (BZP), and the other photoreceptor layer may comprise titanyl phthalocyanine (TiOPc). More particularly, one photoreceptor layer may comprise a generator layer of benzimidazole perylene (BZP) and a transport layer of N,N'-diphenyl-N,N'-bis(3''-methylphenyl)-(1,1'-biphenyl)-4-4'-diamine (m-TPO in polycarbonate), and the other photoreceptor layer may comprise a generator layer of titanyl phthalocyanine (TiOPc) and a transport later of N,N'-diphenyl-N,N'-bis(3''-methylphenyl)-(1-1'biphenyl)-4,4'-diamine (m-TPO in polycarbonate). Said generator later of BZP of said one layer may be approximately 0.1 to 1 µm thick, said transport layer of m-TPO in polycarbonate of said one layer may be approximately 15 µm thick, said generator layer of TiOPc of said other layer may be approximately 0.1 to 1µm thick and said transport layer of m-TPO in polycarbonate of said other layer may be approximately 15 µm thick. The two wavelengths mat be approximately 670 nm and approximately 830 nm.

By way of example only, embodiments of the invention will be described with reference to the accompanying drawings, in which:
Figure 1 is a schematic illustration of the cross-section side view of a xerographic printing system in accordance with the present invention;
Figure 2 is a schematic illustration of the cross-section side view of a multiple layer photoreceptor belt for the xerographic printing system of Figure 1;
Figure 3 is a schematic illustration of the cross-section side view of the exposure of the multiple layer photoreceptor belt in the xerographic printing system of Figure 1;
Figure 4 is a schematic illustration of the wavelength sensitivity of the multiple layer photoreceptor belt versus the wavelength range of the multiple wavelength laser structure for the xerographic printing system of Figure 1;
Figures 5a and 5b are schematic illustrations of the exposure of the multiple layer photoreceptor belt and the development of that multiple layer photoreceptor belt in the xerographic printing system of Figure 1;
Figure 6 is a schematic illustration of an alternative development scheme for a multiple layer photoreceptor belt in the xerographic printing system of Figure 1;
Figure 7 is a schematic illustration of the wavelength sensitivity of another multiple layer photoreceptor belt versus the wavelength range of the multiple wavelength laser structure of the xerographic printing system;
Figure 8 is a schematic illustration of the cross-section side view of the exposure of the multiple layer photoreceptor belt of Figure 7;
Figure 9 is a schematic illustration of the cross-section side view of another xerographic printing system in accordance with the present invention;
Figure 10 is a schematic illustration of the cross-section side view of a dual wavelength laser source for the xerographic printing system of Figure 9;
Figure 11 is a schematic illustration of the cross-section side view of the dual layer photoreceptor belt for the xerographic printing system of Figure 9;
Figure 12 is a schematic illustration of the cross-section side view of the exposure of the dual layer photoreceptor belt in the xerographic printing system of Figure 9; and
Figure 13 is a schematic illustration of the development of the dual layer photoreceptor belt in the xerographic printing system of Figure 9.

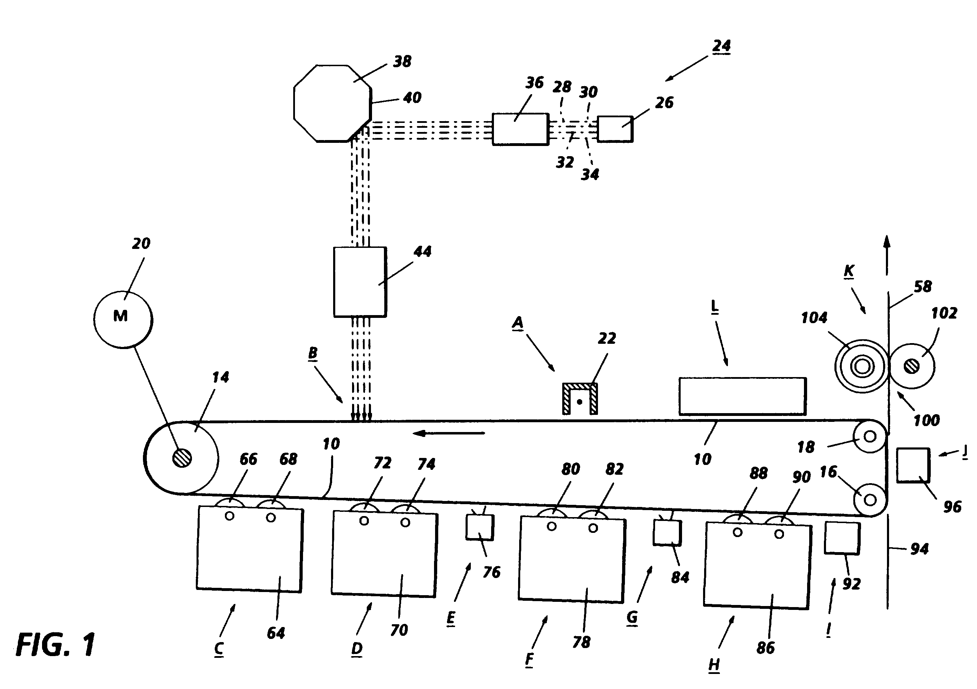

Reference is now made to Figure 1, wherein there is illustrated a xerographic printing system 5 which utilizes a charge retentive member in the form of a photoconductive belt 10 consisting of a photoconductive surface and an electrically conductive substrate and mounted for movement past a charging station A, an exposure station B, a first development station C, a second development station D, a first uniform exposure station E, a third development station F, a second uniform exposure station G, a fourth development station H, a pre-transfer charging station I, a transfer station J, a fusing station K and a cleaning station L. Belt 10 moves in the direction of arrow 12 to advance successive portions of the belt sequentially through the various processing stations disposed about the path of movement thereof for forming images in a single pass of the belt through all of the process stations. Belt 10 is entrained about a plurality of rollers 14, 16 and 18, the former of which can be used as a drive roller and the latter of which can be used to provide suitable tensioning of the photoreceptor belt 10. Motor 20 rotates roller 14 to advance the belt 10 in the direction of arrow 12. Roller 14 is coupled to motor 20 by suitable means such as a belt drive.

As can be seen by further reference to Figure 1, initially successive portions of belt 10 pass through charging station A, where a corona discharge device such as a scorotron, corotron, or dicorotron, indicated generally by the reference numeral 22, charges the belt 10 to a selectively high uniform positive or negative potential, V₀. Any suitable control circuit, as well known in the art, may be employed for controlling the corona discharge device 22.

Next, the charged portions of the photoreceptor surface are advanced through exposure station B. At exposure station B, the uniformly charged photoreceptor or charge retentive surface 10 is exposed to a raster output scanning device 24 which causes the charge retentive surface to remain charged or to be discharged in accordance with the output from the scanning device. An electronic subsystem converts a previously stored image into the appropriate control signals for the ROS in an imagewise fashion.

The raster output scanner 24 uses a plurality of clustered laser beams of different wavelengths having substantially parallel optical axes. To reduce the problems of obtaining equal optical path lengths, to reduce the difficulty of spot registration, and to eliminate beam alignment problems, the multistation printing system of Figure 1 generates closely spaced, multiple wavelength laser beams using either a single structure or closely adjacent structures.

A quad laser semiconductor structure 26 emits four different wavelength laser beams, designated laser beams 28, 30, 32 and 34, at about 450, 540, 670, and 830 nanometers, respectively in the blue, green, red and infrared wavelengths. For purposes of clarity, only the chief rays are shown. The laser semiconductor structure 26 effectively provides a substantially common spatial origin for each beam. Each beam is independently modulated so that it exposes its associated photoreceptor layer in accordance with a respective color image. It is important that each color spot from the four laser beams be scanned over the entire photoreceptor so that any desired voltage discharge level (and resulting deposited color toner) can be achieved anywhere on the photoreceptor. In this embodiment, the four spots are aligned parallel to the scanning motion along the photoreceptor. All four spots would be scanned over a given point on the photoreceptor on each scan. The spot to spot spacings should be as small as possible to hold all beam centers as close as possible to the optical axis to minimize image distortions. After passing through the ROS and scanning optics, the spots are focussed onto the photoreceptor in a configuration similar to their configuration at the light emitting source.

Referring to the raster output scanner 24 of Figure 1, the four laser beams from the laser structure 26 are input to a conventional beam input optical system 36 which collimates, conditions and focuses the beams onto an optical path such that they illuminate a rotating polygon mirror 38 having a plurality of facets 40. As the polygon mirror rotates, the facets cause the reflected beams to deflect repeatedly so that they are input to a single set of imaging and correction optics 44, which corrects for errors such as polygon angle error and wobble and focuses the beams onto the photoreceptor belt.

As stated earlier, at exposure station B, the uniformly charged photoreceptor or charge retentive surface 10 is exposed to raster output scanning device 24 which causes the charge retentive surface to remain charged or to be discharged in accordance with the output from the scanning device.

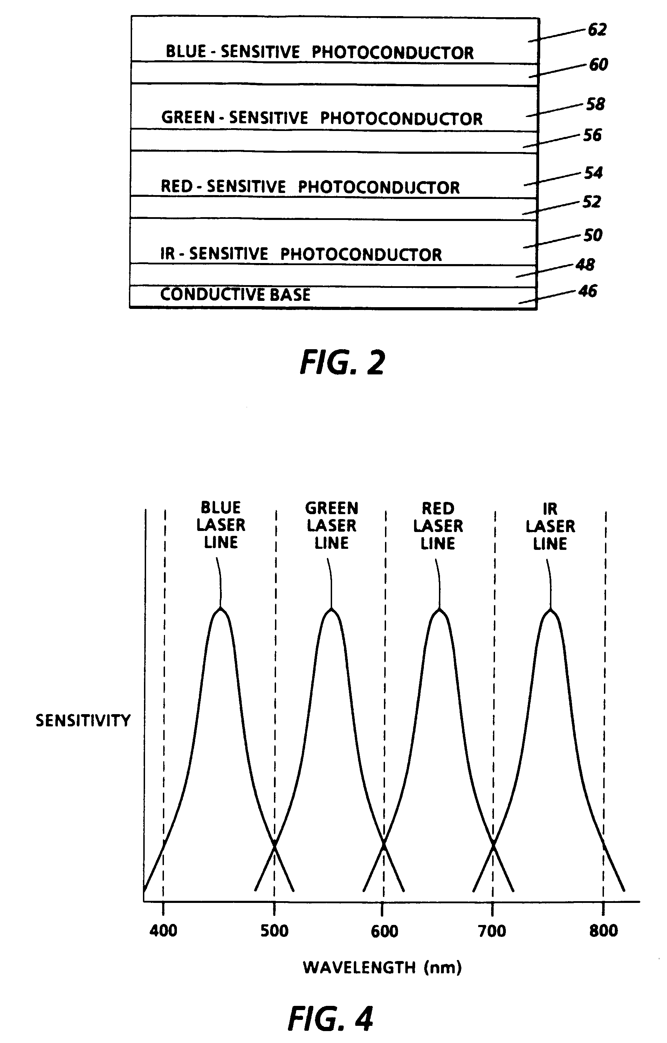

The photoreceptor belt 10 as shown in Figure 2 consists of a flexible electrically conductive substrate 46. The substrate has any effective thickness, typically from about 6 to about 250 microns, and preferably from about 50 to about 200 microns, although the thickness can be outside of this range. The photoreceptor layers themselves may consist of two or more sublayers. Each photoreceptor layer in Figure 2 consists of two sublayers, i.e. a charge generator layer and a charge transport layer.

Upon the substrate 46 is a first, infrared-sensitive, generator layer 48 approximately 0.1 to 1 µm thick and a first transport layer 50 of m-TPO in polycarbonate (N,N'-diphenyl-N,N'-bis(3''-methylphenyl)-(1,1'-biphenyl)-4,4'-diamine ) which is hole transporting and approximately 15 µm thick. Upon the first generator and transport layers is a second, red-sensitive, generator layer 52 approximately 0.1 to 1 µm thick, a second transport layer 54 of m-TPO in polycarbonate which is hole transporting and approximately 15 µm thick. Upon the second generator and transport layers is a third, green-sensitive, generator layer 56 approximately 0.1 to 1 µm thick, a third transport layer 58 of m-TPO in polycarbonate which is hole transporting and approximately 15 µm thick. And upon the third generator and transport layers is a fourth, blue-sensitive, generator layer 60 approximately 0.1 to 1 µm thick, and a fourth transport layer 62 of m-TPO in polycarbonate which is hole transporting and approximately 15 µm thick.

The generator and transport layers can be deposited or vacuum evaporated or solvent coated upon the substrate by means known to those of ordinary skill in the art.

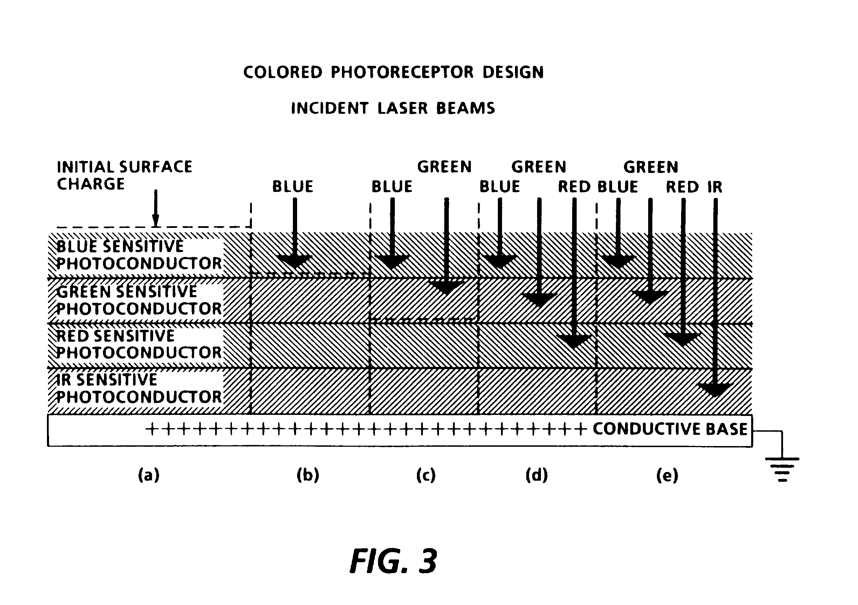

The details of the imaging process to expose the 4-color image in a single pass of the photoreceptor belt are shown in Figure 3. Light of different colors will be absorbed in different layers of the photoreceptor. Therefore the red laser spot will be absorbed in the red sensitive layer, the green spot in the green sensitive layer , the blue spot in the blue sensitive layer, and the IR spot in the IR sensitive layer.

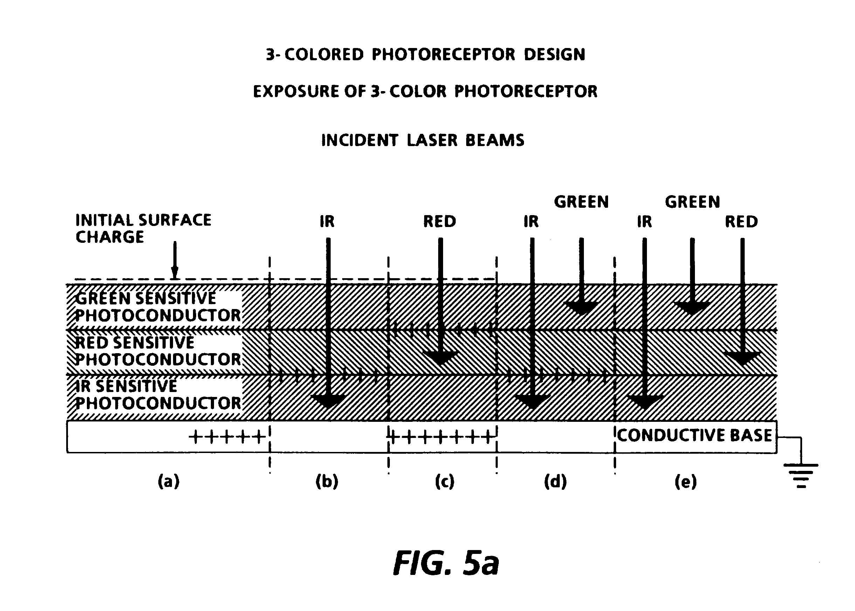

As shown in Figure 4, each generator layer may be sensitive to only one of the wavelengths from one of the lasers of the multiple wavelength laser source while being transparent to the other wavelengths from the other lasers of the multiple wavelength laser source. The sensitivity of each layer of the photoreceptor is separated as are the wavelengths of the light from the laser source. In order for the discharge to occur only in the required layer, the sensitivity of each of the layers must be well separated and over a narrow range of wavelengths. The blue laser line should be absorbed only by the blue sensitive photoconducting pigment and not by the green, red or IR sensitive layers. The spectral sensitivity of the photoconducting layers should match the output of the laser light sources as closely as possible. Ideally each of the photoconducting layers should be excited by only one of the lasers and should be transparent to the other laser lines.

The multi-layer photoreceptor is discharged to different levels depending on the color(s) of incident light as shown in Figure 3. There are five resultant areas illustrated on the photoreceptor: (a) the unexposed areas of no layers which retain the original surface voltage, (b) the top layer exposed only to the blue light, (c) the two top layers exposed only to the blue light and the green light, (d) the three top layers exposed only to the blue light, the green light and the red light, and (e) the fully discharged areas of all four layers exposed to the blue light, the green light, the red light, and the infrared light. However, discharge to each level can in general be achieved in a plurality of ways.

Depending upon the number of colors and color combinations desired for printing, one could, for example, use a dual layer photoreceptor in combination with a dual wavelength light source as described later; a three layer photoreceptor in combination with a three wavelength light source; or a four layer photoreceptor in combination with a four wavelength light source.

The dual layer photoreceptor and dual wavelength system is capable of producing 3 (SPOT) color images. The three layer photoreceptor and three wavelength system is capable of producing 4 (SPOT) color images. The four layer photoreceptor, four wavelength system is capable of producing full color process images. SPOT color is such that only a single color of toner is deposited at any one point of the image, i.e. there is no development of one color toner on top of another. In process color images, cyan, magenta, yellow and black toners are generally used with a color on color scheme wherein all three combinations of any two of the cyan, magenta and yellow colorants on top of each other are used along with the individual cyan, magenta, yellow and black colorants alone.

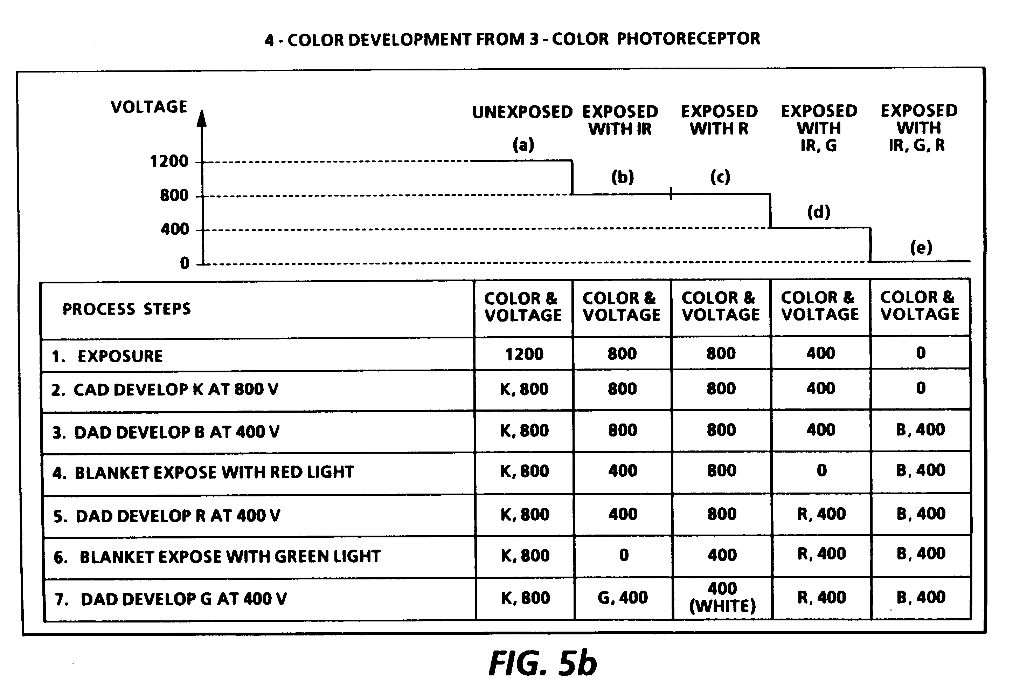

A four color development process can be caried out in many ways. One way is shown in Figures 1 and 5a and 5b. In this additive color system the primary colors, red, green, blue and black are generally used. Both polarities of toner are used and both CAD (charged area development) and DAD (discharged area development) development are used. Appropriate development biases are used at each step. Scavengeless development techniques would be used to avoid contamination of developer housings by already deposited toner of another color. For convenience it is assumed that the initial charging voltage is 1200 V on the three layer photoreceptor and that the four voltage levels are equally spaced at 400 V intervals.

In the scheme shown in Figure 5b, two blanket or uniform exposure steps are used in order to change relative voltage levels in the electrostatic image and thereby allow five differently toned areas. These blanket exposure steps are relatively easy to perform with a simple light source such as a narrow fluorescent strip or tube, or narrow incandesdent bulb which is appropriately filtered to transmit only the IR or blue or whatever color is required. A restricted color of light from the blanket exposure is important, but beyond a certain minimum the absolute level of exposure is not. Such a narrow strip or tube is easily inserted between the developer stations.

Four SPOT color imaging can be done with a three color photoreceptor, three wavelength system. Figure 5a shows five different exposure combinations of IR, red and green light on a three layer photoreceptor whose three layers are sensitive to IR, red and green light respectively. The five different exposure combinations will result in four different colored areas plus an uncolored white area on the final print. Area (a) is unexposed and remains at 1200 V; area (b) is exposed with IR only and discharged to 800 V; area (c) is exposed with red only and discharged to 800 V; area (c) is exposed with IR and green and discharged to 400 V; and area (e) is exposed with IR, red and green and discharged to 0 V.

The steps in the four color development process of the embodiment in Figure 5b are: first, exposure of the photoreceptor belt to the three modulated laser beams of different wavelengths; second, CAD development of the black at 800 volts in area (a); third, DAD development of the blue at 400 volts in area (e); fourth, blanket exposure of the photoreceptor belt with red light to discharge area (b) to 400 V and area (d) to 0 V;fifth, DAD development of the red at 400 volts in area (d); sixth, blanket exposure of the photoreceptor belt with green light to discharge area (b) to 0 V and area (c) to 400 V; and seventh, DAD development of the green at 400 volts in area (b).

After biasing at 800 V and toning with black toner in step 2, the surface potential in the area (a) initially at 1200 V is reduced to 800 V since the primary development mechanism is charge neuralization. After biasing at 400 V and DAD toning with blue toner in step 3, the surface potential in area (e) initially at 0 V is raised to 400 V. The blanket exposure in step 4 reduces the surface potential in area (b) from 800 V to 400 V and in area (d) from 400 V to 0 V since these areas have not yet been exposed with red light. The surface potential in area (c) remains unchanged at 800 V since this area has already been exposed with red light. The black toner in area (a) and blue toner in area (e) both block the red light exposure and prevent surface potential discharge in these areas. After biasing at 400 V and DAD toning with red toner in step 5, the surface potential in area (d) initially at 0 V is raised to 400 V. The blanket exposure with green light in step 6 drops the surface voltage in area (b) from 400 V to 0 V and in area (c) from 800 V to 0 V since neither of these areas have seen green light. In the other areas, the black, red and blue toners all block green light to prevent further discharge. After biasing at 400 V and DAD toning with green toner at 400 V in step 7, the surface potential in area (b) initially at 0 V is raised to 400 V.

Thus, at the first development station C, a CAD development system, indicated generally by the reference numeral 64, advances developer materials into contact with the electrostatic latent images. The development system 64 comprises a developer housing. The developer housing 64 contains a pair of magnetic brush rollers 66 and 68. The rollers advance developer material into contact with the photoreceptor for developing the regions above the bias potential. The developer material, by way of example, contains positively charged black toner. The black toner is applied to the latent electrostatic images contained on the photoconductive surface 10 via magnetic brush rollers, the carrier of this two component developer being selected such that the black toner is positively charged through triboelectric charging thereagainst. Electrical biasing is accomplished via power supply, electrically connected to developer apparatus. A suitable DC bias voltage is applied to the rollers 66 and 68 via the power supply.

At second development station D, a DAD development system, indicated generally by the reference numeral 70, advances developer materials into contact with the DAD electrostatic latent images. The development system 70 comprises a first developer housing The developer housing 70 contains a pair of magnetic brush rollers 72 and 74. The rollers advance developer material into contact with the photoreceptor for developing the regions below the bias potential. The developer material, by way of example, contains negatively charged blue toner. The blue toner is applied to the latent electrostatic images contained on the photoconductive surface 10 via magnetic brush rollers, the carrier of this two component developer being selected such that the blue toner is negatively charged through triboelectric charging thereagainst. Electrical biasing is accomplished via power supply, electrically connected to developer apparatus. A suitable DC bias voltage is applied to the rollers 72 and 74 via the power supply.

Next, a non-imaging uniform exposure of infrared light is applied to the photoconductor with a well controlled light source such as a fluorescent lamp 76 at the first uniform exposure station E. The areas of the photoreceptor that have already been developed with black or blue toner, are shielded from the red light by the deposited toner, so, little or no discharge occurs in these areas. If necessary, the emission spectrum of the lamp could be tuned relative to the absorption spectra of the toners to fully insure that discharge beneath the toners does not take place.

At third development station F, a DAD development system, indicated generally by the reference numeral 78, advances developer materials into contact with the electrostatic latent images. The developer housing 78 contains a pair of magnetic rolls 80 and 82. The rollers advance developer material into contact with the photoreceptor for developing the regions below the bias potential. The developer material, by way of example, contains negatively charged red toner. Appropriate electrical biasing is accomplished via power supply electrically connected to developer apparatus. A suitable DC bias is applied to the rollers 80 and 82 via the bias power supply.

Next, a non-imaging uniform exposure of green light is applied to the photoconductor with a well controlled light source such as a fluorescent lamp 84 at the second uniform exposure station G. The areas of the photoreceptor that have already been developed with black, blue and red toner, are shielded from the light by the deposited toner, so, little or no discharge occurs in these areas. If necessary, the emission spectrum of the lamp could be tuned relative to the absorption spectra of the toners to fully insure that discharge beneath the toners does not take place.

At fourth development station H, a DAD development system, indicated generally by the reference numeral 86, advances developer materials into contact with the electrostatic latent images. The developer housing 86 contains a pair of magnetic rolls 88 and 90. The rollers advance developer material into contact with the photoreceptor for developing the regions below the bias potential. The developer material, by way of example, contains negatively charged green toner. Appropriate electrical biasing is accomplished via power supply electrically connected to developer apparatus. A suitable DC bias is applied to the rollers 88 and 90 via the bias power supply.

Thus the development process produces four colors plus white in the final print. In principle any four colors of toner can be used as long as each color has good absorption of the light in subsequent blanket exposure steps to prevent discharge of the underlying photoreceptor in these regions

Because the composite image developed on the photoreceptor consists of both positive and negative toner, a typically positive pre-transfer corona discharge member 92, disposed at pre-transfer charging station I, is provided to condition the toner for effective transfer to a substrate using positive corona discharge. The pre-transfer corona discharge member is preferably an AC corona device biased with a DC voltage to operate in a field sensitive mode and to perform xerography pre-transfer charging in a way that selectively adds more charge (or at least comparable charge) to the parts of the image that must have their polarity reversed. This charge discrimination may be enhanced by discharging the photoreceptor carrying the composite developed latent image with light before the pre-transfer charging begins. Furthermore, flooding the photoreceptor with light coincident with the pre-transfer charging minimizes the tendency to overcharge portions of the image which are already at the correct polarity.

A sheet of support material 94 is moved into contact with the toner image at transfer station J. The sheet of support material is advanced to transfer station J by conventional sheet feeding apparatus, not shown. Preferably, the sheet feeding apparatus includes a feed roll contacting the uppermost sheet of a stack copy sheets. Feed rolls rotate to advance the uppermost sheet from the stack into a chute which directs the advancing sheet of support material into contact with photoconductive surface of belt 10 in a timed sequence, so that the developed toner powder image contacts the advancing sheet of support material at transfer station J.

Transfer station J includes a corona generating device 96 which sprays ions of a suitable polarity onto the backside of sheet 94. This attracts the charged toner powder images from the belt 10 to sheet 94. After transfer, the sheet continues to move, in the direction of arrow 98, onto a conveyor (not shown) which advances the sheet to fusing station K.

Fusing station K includes a fuser assembly, indicated generally by the reference numeral 100, which permanently affixes the transferred powder image to sheet 94. Preferably, fuser assembly 100 comprises a heated fuser roller 102 and a backup roller 104. Sheet 94 passes between fuser roller 102 and backup roller 104 with the toner powder image contacting fuser roller 102. In this manner, the toner powder image is permanently affixed to sheet 94. After fusing, a chute, not shown, guides the advancing sheet 94 to a catch tray, also not shown, for subsequent removal from the printing machine by the operator.

After the sheet of support material is separated from photoconductive surface of belt 10, the residual toner particles carried on the photoconductive surface are removed therefrom. These particles are removed at cleaning station L. A magnetic brush cleaner housing is disposed at the cleaner station L. The cleaner apparatus comprises a conventional magnetic brush roll structure for causing carrier particles in the cleaner housing to form a brush-like orientation relative to the roll structure and the charge retentive surface. It also includes a pair of detoning rolls for removing the residual toner from the brush.

Subsequent to cleaning, a discharge lamp (not shown) floods the photoconductive surface with light to dissipate any residual electrostatic charge remaining prior to the charging thereof for the successive imaging cycle.

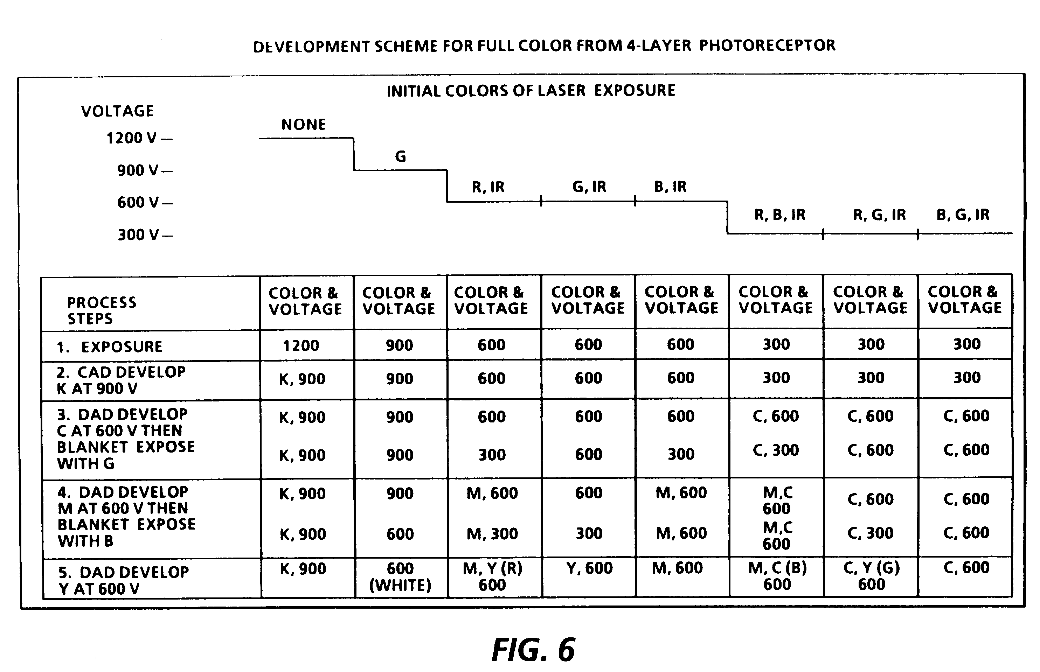

Four color development with a subtractive color scheme using cyan, magenta, yellow and black (C,M,Y,K) toners is another possibility. The development scheme must be able to deposit up to two colors of toners in any given pixel. Deposition of three colors, cyan, magenta and yellow (C,M,Y) is replaced by deposition of black (K) toner only. An appropriate combination of toner polarities, development biases and intermediate exposure steps must again be used. In choosing these combinations one must use the fact that identical photoreceptor surface voltages can be achieved by several different combinations of color exposures, as shown in Figure 6.

The steps in the four color development process of the second embodiment in Figure 6 are: first, exposure of the photoreceptor belt to the four modulated laser beams of different wavelengths; second, CAD development of the black at 900 volts; third, DAD development of the cyan at 600 volts, then blanket exposure with green light; fourth, DAD development of the magenta at 600 volts, then blanket exposure with blue light; and fifth, DAD development of the yellow at 600 volts.

CAD development of black (K) toner is done in the first step. Black toner shields those areas which it has covered from the blanket green and blue exposures which are performed in steps 3 and 4. This prevents significant discharge and subsequent development of additional toner layers over the K layer. Those areas initially exposed with green light survive the blanket green light exposure in the third step and survive all subsequent development steps without development of toner and become the white areas. All combinations of one or two colors of toner are covered in the remaining steps of Figure 6. Therefore full color pictorial imaging is possible with this development scheme.

The xerographic printing system for subtractive primary color toners would be similar to the xerographic printing system for additive primary color toners of Figure 1. The charging station, the ROS and the exposure station at the beginning of the printing system and the pre-transfer charging station, the transfer station, the fusing station and the cleaning station at the end of the printing system would be the same although the four light beams would be modulated differently to account for the change from additive to subtractive primary colors.

The intervening exposure and development stations of the subtractive primary color printing system would be similar to the ones of the additive primary color printing system. The subtractive primary color printing system, after the exposure station, would have a first CAD development station, a second DAD development station, a first uniform exposure station, a third DAD development station, a second uniform exposure station and a fourth DAD development station. Then, the pre-transfer station would follow.

It is important that each color spot from the multiple laser beams be scanned over the entire photoreceptor so that any desired voltage discharge level (and resulting deposited color toner) can be achieved anywhere on the photoreceptor. Alternatively in either xerographic printing system, the multiple beams of different wavelengths of the laser emitter of the ROS can be aligned perpendicular to the scanning motion along the photoreceptor. Each scan would cover four lines so that it would take four scans for all four spots to cover any given point on the photoreceptor.

As mentioned previously, this multiple wavelength laser source ROS system could be enhanced by use of multispot sources for each of the colors which would result in increased addressability/throughput. The four color spots can be aligned parallel to the scanning motion along the photoreceptor with the same color spot also be aligned four deep perpendicular to the scanning motion along the photoreceptor. All four color spots would be scanned over a given point on the photoreceptor on each of four consecutive scans for a total of 16 spots imaged on the photoreceptor simultaneously.

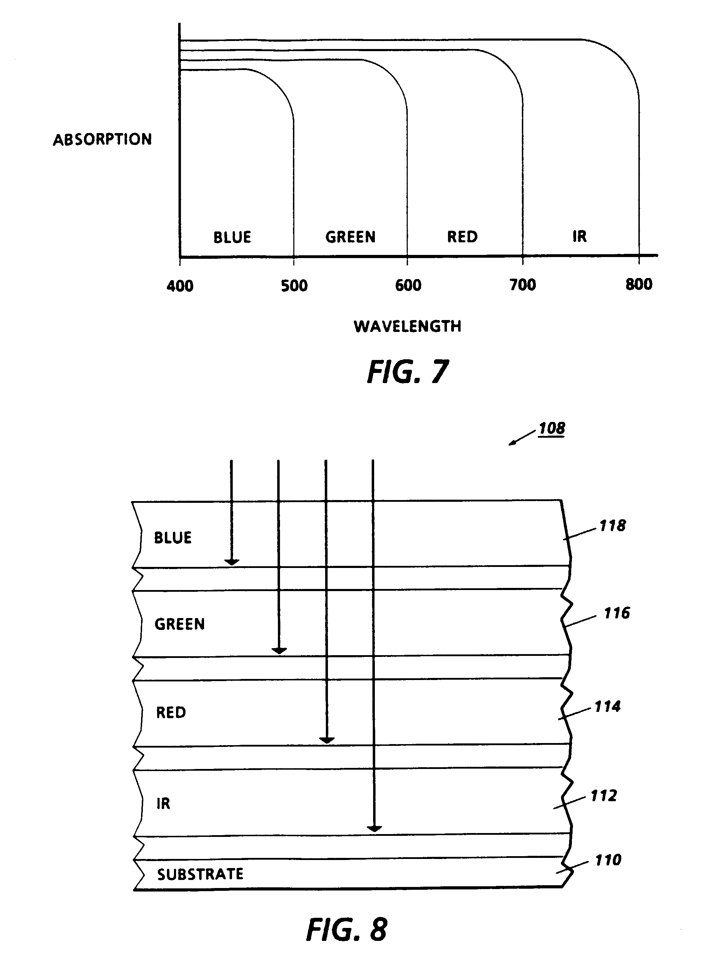

An alternative photoreceptor belt could have the generator layers sensitive to more than one color or sensitive over a wider range of wavelength. As shown in Figure 7, one photoconducting layer would be sensitive to just blue, another photoconducting layer would be sensitive to blue and green, another photoconducting layer would be sensitive to blue, green, and red, and the last photoconducting layer would be sensitive to blue, green, red and infrared.

The photoreceptor 108 as seen in Figure 8 would have the conductive substrate 110 upon which is the first or lower photoconducting layer 112 sensitive to blue, green, red and infrared, then the second or lower middle photoconducting layer 114 sensitive to blue, green, and red, then the third or upper middle photoconducting layer 116 sensitive to blue and green, then the fourth or upper photoconducting layer 118 sensitive to just blue.

These layers are stacked such that the broadest sensitivity (IR sensitive) layer is at the bottom of the photoreceptor, the next broadest is on top of this and so on to the top where the narrowest sensitivity (blue sensitive) layer is situated. Light of a given color is accessible to only one of the photoreceptor layers. Blue light is absorbed in the top layer and cannot reach any of the lower layers which could also be sensitive to it. Green light passes through the blue sensitive layer and is absorbed in the second layer and prevented from reaching layers below which could also be sensitive to it. This pattern continues so that each wavelength is absorbed by only one photoreceptor layer.

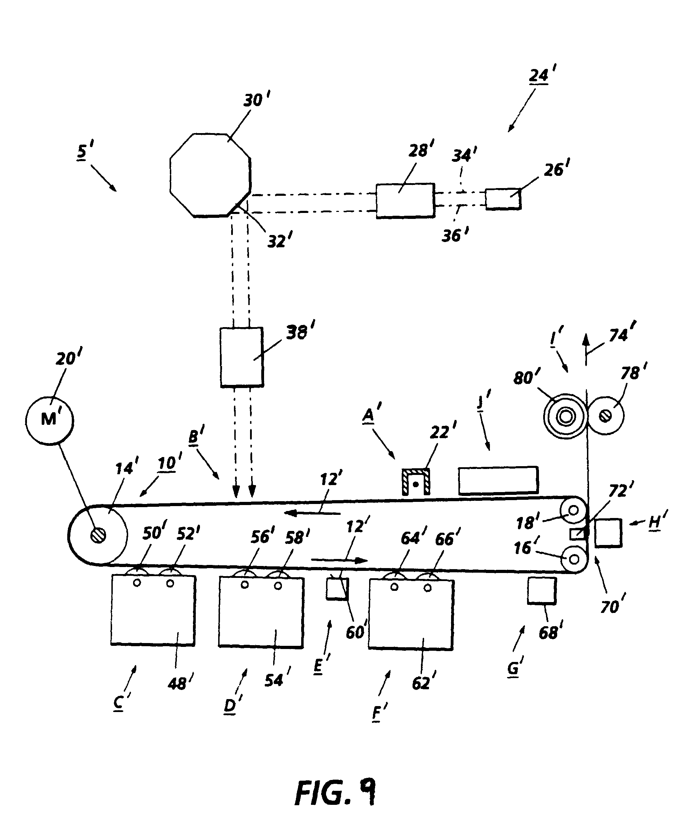

Reference is now made to Figure 9, wherein there is illustrated a xerographic printing system 5' incorporating a dual layer photoconductive belt 10' mounted for movement past a charging station A', an exposure station B', a first development station C', a second development station D', a uniform exposure station E', a third development station F', a pre-transfer charging station G', a transfer station H', a fusing station I', and a cleaning station J'. Belt 10' moves in the direction of arrow 12' to advance successive portions of the belt sequentially through the various processing stations disposed about the path of movement thereof for forming images in a single pass of the belt through all of the process stations. Belt 10' is entrained about a plurality of rollers 14', 16' and 18', the former of which can be used as a drive roller and the latter of which can be used to provide suitable tensioning of the photoreceptor belt 10'. Motor 20' rotates roller 14' to advance the belt 10' in the direction of arrow 12'. Roller 14' is coupled to motor 20' by suitable means such as a belt drive.

As can be seen by further reference to Figure 9, initially successive portions of belt 10' pass through charging station A', where a corona discharge device such as a scorotron, corotron, or dicorotron, indicated generally by the reference numeral 22', charges the belt 10' to a selectively high uniform positive or negative potential, V₀. Any suitable control circuit, as well known in the art, may be employed for controlling the corona discharge device 22'.

Next, the charged portions of the photoreceptor surface are advanced through exposure station B'. At exposure station B', the uniformly charged photoreceptor or charge retentive surface 10' is exposed to a raster output scanning device 24' which causes the charge retentive surface to remain charged or to be discharged in accordance with the output from the scanning device. An electronic subsystem converts a previously stored image into the appropriate control signals for the ROS in an imagewise fashion.

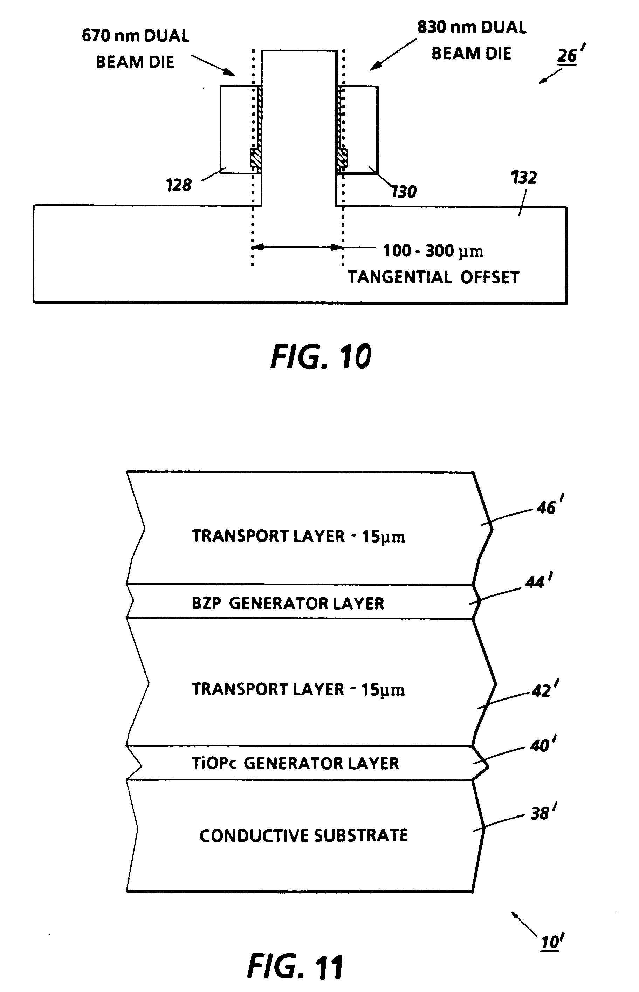

Referring to Figure 10, the raster output scanner 24' can use a dual wavelength hybrid laser semiconductor structure 26' consisting of a 670 nm wavelength laser emitter 128 such as a semiconductor structure of AlGalnP/GaAs and a 830 nm laser emitter 130 such as a semiconductor structure of AlGaAs/GaAs, both laser emitter structures being known to those of ordinary skill in the art.

The different wavelength beams must be scanned over on top of each other on the photoreceptor to maintain registration and avoid misalignment. The tangential offset, as indicated in Figure 10, is given an upper limit of 300 µm since tangential offset does not introduce scan line bow. The effect of tangential offset is to require a delay in the electronic modulation signals to one of the dual beams relative to the other since one beam lags the other during scanning across the photoreceptor.

In addition to the laser emitter die orientation, a possible submount configuration is also shown in Figure 10. The inverted T submount 132 can be readily cut from Si. Submounts of this type are currently being made and tested. With p-side down mounting the tangential offset is controlled by the width of the T. Sagittal offset can be controlled by aligning the dies vertically, for example by aligning the top edges of the dies with the top of the inverted T. One or more beams can be emitted at each wavelength. Figure 10 shows two laser stripes and thus two beams being emitted, one at each of the two wavelengths.

The dual wavelength laser structure provides a substantially common spatial origin for each beam. Each beam is independently modulated so that it exposes the photoreceptor 10' in accordance with a respective color image.

Referring to the raster output scanner of Figure 9, the two laser beams 34' and 36' from the laser structure 26' are input to a conventional beam input optical system 28' which collimates, conditions and focuses the beams onto an optical path such that they illuminate a rotating polygon mirror 30' having a plurality of facets 32'. As the polygon mirror rotates, the facets cause the reflected beams to deflect repeatedly so that they are input to a single set of imaging and correction optics 38', which corrects for errors such as polygon angle error and wobble and focuses the beams onto the photoreceptor belt.

As stated earlier, at exposure station B', the uniformly charged photoreceptor or charge retentive surface 10' is exposed to a raster output scanning device 24' which causes the charge retentive surface to remain charged or to be discharged in accordance with the output from the scanning device.

The photoreceptor belt 10' as shown in Figure 11 has a flexible electrically conductive substrate 38'. The substrate has any effective thickness, typically from about 6 to about 250 microns, and preferably from about 50 to about 200 microns, although the thickness can be outside of this range. The photoreceptor layers themselves may consist of two or more sublayers. Each photoreceptor layer in Figure 11 consists of two sublayers, i.e. a charge generation layer and a charge transport layer.

Upon the substrate is a titanyl phthalocyanine (TiOPc) first or lower generator layer 40' of approximately 0.1 to 1 µm thickness, a first or lower transport layer 42' of N,N'-diphenyl-N,N'-bis(3''-methylphenyl)-(1,1'-biphenyl)-4,4'-diamine in polycarbonate(m-TPO ) which is hole transporting and approximately 15 µm thick, a benzimidazole perylene (BZP) second or upper generator layer 44' of approximately 0.1 to 1 µm thickness, and a second or upper transport layer 46' of m-TPO in polycarbonate which is hole transporting and approximately 15 µm thick.

The TiOPc generator layer should be thin enough to maintain low dark decay and the BZP generator layer should be thick enough to be opaque to the wavelength used to discharge it. BZP is known to be coatable to opaque thicknesses while maintaining low dark decay.

For this illustrative example, the first generator layer is infrared sensitive and the second generator layer is red sensitive and the two wavelengths of the dual wavelength laser source are in the red (at 670 nm) and the infrared (at 830 nm). The general requirement is that each generator layer is sensitive to only one of the two different wavelengths of the laser source but not sensitive to the other wavelength or that each generator layer can only be accessed by one of the two wavelengths.

The generator and transport layers can be deposited or vacuum evaporated or solvent coated upon the substrate by means known to those of ordinary skill in the art.

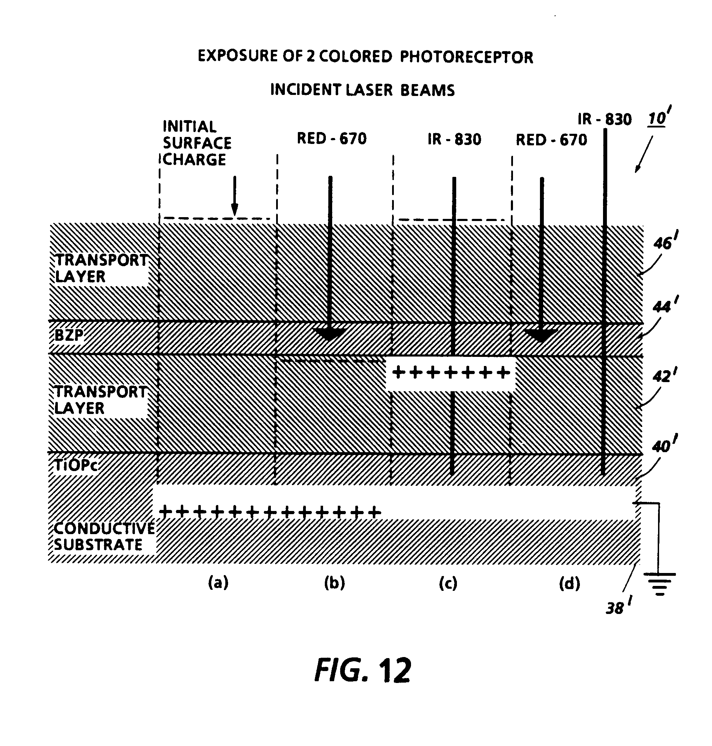

During exposure from the light beams from the raster output scanner within the photoreceptor belt as shown in Figure 12, the 670 nm wavelength of one modulated beam would be entirely absorbed in the opaque BZP generator layer. Exposure with the 670 nm beam would therefore discharge the BZP and upper transport layer. None of the 670 nm light beam would reach the TiOPc layer so that the TiOPc and lower transport layer would remain fully charged. The second wavelength is chosen to be 830 nm to insure that it will pass completely throught the BZP layer without effecting any discharge of the BZP or upper transport layer. However, the TiOPc layer is very sensitive to 830 nm and exposure with this wavelength from a modulated beam will discharge the TiOPc layer and the lower transport layer. However, the 830 nm exposure should not be allowed to effect discharge through the BZP layer and the upper transport layer.

The details of the imaging process to expose the 3-color image in a single pass of the photoreceptor belt are shown in Figure 12. There are four resultant areas on the photoreceptor: (a) the unexposed areas which retain the original surface voltage, (b) the areas exposed with 830 nm which are discharged to roughly one-half of the original surface voltage, (c) the areas exposed with 670 nm which are also discharged to roughly one-half of the original surface voltage, and (d) the areas exposed with both 830 and 670 nm which are fully discharged. While only three voltage levels are present on the photoreceptor at this stage immediately after exposure, there will be four distinctly different areas on the photoreceptor after xerographic development as shown in Figure 12. While the surface voltages in regions (b) and (c) are roughly equal after exposure they have been formed in very distinct ways. During the development process the photoreceptor will remember how these voltages were formed to allow development in very different ways in the two regions.

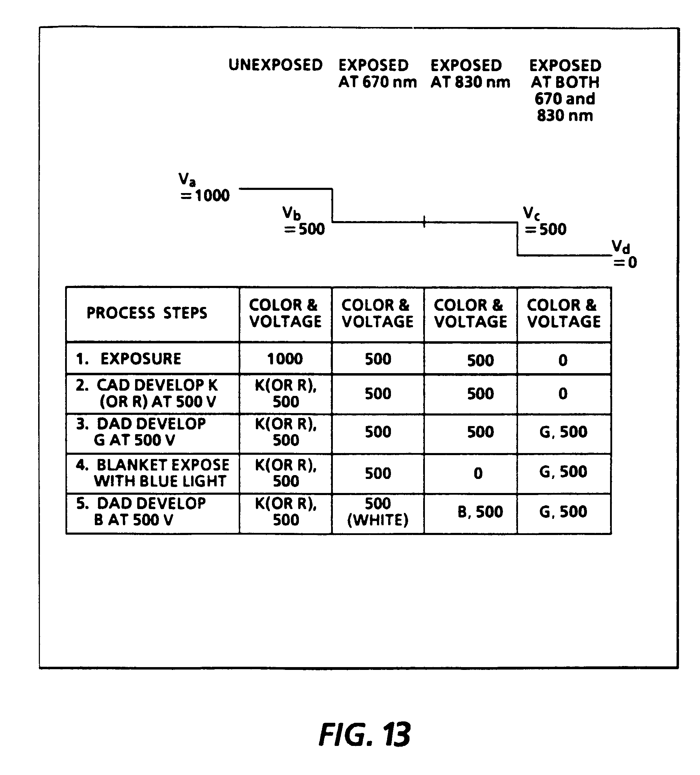

The steps in the three color plus white development process of Figure 13 are: first, exposure of the photoreceptor belt to the two modulated laser beams of different wavelengths; second, CAD development with black toner at 500 volts; third, DAD development with green toner at 500 volts; fourth, blanket exposure of the photoreceptor belt with blue light; and fifth, DAD development with blue toner at 500 volts.

At development station C' (Figure 9), a development system, indicated generally by the reference numeral 48', advances developer materials into contact with the CAD electrostatic latent images. The development system 48' comprises a developer housing. The developer housing 48' contains a pair of magnetic brush rollers 50' and 52'. The rollers advance developer material into contact with the photoreceptor 10' for developing the charged-area regions (V_{CAD}). The developer material, by way of example, contains black toner which will be positively charged for a negatively charged photoreceptor. The black toner is applied to the latent electrostatic images contained on the photoconductive surface 10' via magnetic brush rollers, the carrier of this two component developer being selected such that the black toner is positively charged through triboelectric charging thereagainst. Electrical biasing is accomplished via power supply, electrically connected to the developer apparatus. A suitable DC bias volts is applied to the rollers 50' and 52' and the developer housing 48' via the power supply.

At development station D', a development system, indicated generally by the reference numeral 54', advances developer materials into contact with the DAD electrostatic latent images. The development system 54' comprises a developer housing. The developer housing 54' contains a pair of magnetic rolls 56' and 58'. The rollers advance developer material into contact with the photoreceptor for developing the discharged-area regions (V_{DAD}). The developer material, by way of example, contains green toner which will be positively charged for a negatively charged photoreceptor. Appropriate electrical biasing is accomplished via power supply electrically connected to the developer apparatus. A suitable DC bias is applied to the rollers 56' and 58' and the developer housing 56' via the bias power supply.

The details of the xerographic process to develop the 3-color image in a single pass are shown in Figure 13. For convenience, the 3 voltage levels after exposure are assumed to be 1000 V, 500 V and 0 V. CAD development at the first development housing at a bias of 500 V is used to deposit black (K) (or red (R)) toner in the unexposed (a) regions. DAD development at the second development housing at a bias of 500 V is used to deposit green (G) toner in the fully exposed (d) regions.

The condition of the photoconductor after these first two steps of development is that the developed portions of the photoreceptor with deposited color toners will now have voltage levels approximately equal to the respective developer housing bias levels as the result of using a development system such as Conductive Magnetic Brush (CMB) development since the primary development mechanism is charge neutralization.

Next, a non-imagewise uniform blanket exposure of blue light is applied to the photoreceptor at uniform exposure station E' with a well controlled light source such as a fluorescent lamp 60', as shown in Figure 9. The areas of the photoreceptor that have already been developed with black and green toners, are shielded from the light by the deposited toner, so, little or no discharge occurs in these areas. The emission spectrum of the lamp, if necessary, could be tuned relative to the absorption spectra of the toners to fully insure that discharge beneath the toner does not take place.

As seen in Figure 13, blanket exposure with blue light will leave the unexposed region (a) unaffected since the black toner should prevent exposure of the underlying photoreceptor.
The white or 670 nm exposed (b) regions should also be unaffected since the BZP layer will absorb all of the blue light before it gets to the TiOPc layer. However, absorption in the BZP will not affect the surface voltage since the top half of the photoreceptor has already been discharged by exposure to 670 nm in the white (b) regions. Since the 830 nm exposed (c) regions have not yet seen blue light, the top half of the photoreceptor will be discharged by this blanket blue exposure to put these regions in a fully discharged state. This is how the photoreceptor remembers its previous history and a blanket exposure with blue light separates the voltages in the 670 nm exposed (b) and the 830 nm exposed (c) regions. Since the fully exposed (d) regions are shielded by green toner, the blanket exposure with blue light has no effect there.

Returning to Figure 9, at development station F', a development system, indicated generally by the reference numeral 62', advances developer materials into contact with the DAD electrostatic latent images. The development system 62' comprises a developer housing. DAD development at the third developer housing at 500 V is used to deposit blue (B) toner on the 830 nm exposed (c) regions. The developer housing 62' contains a pair of magnetic rolls 64' and 66'. The rollers advance developer material into contact with the photoreceptor for developing the discharged-area regions (V_{DAD}). The developer material contains blue toner which will be neagtively charged for a negatively charged photoreceptor. Appropriate electrical biasing is accomplished via power supply electrically connected to the developer apparatus. A suitable DC bias is applied to the rollers 64' and 66' and to the developer housing 62' via the bias power supply.

The only general requirements for the blanket exposure station and the DAD third development housing are that the wavelength of the blanket exposure light should not penetrate the already toned regions and should discharge only one of the two already partially discharged regions and that the color toner deposited by the third development housing should be different from the color toners used in the first two developer housings.

Thus the development process produces three colors plus white in the final print. In principle any three colors of toner can be used as long as the first two colors have good absorption of the light in the subsequent blanket exposure step to prevent discharge of the underlying photoreceptor in these regions.

Because the composite image developed on the photoreceptor consists of both positive and negative toner, a typically positive pre-transfer corona charging member 68', disposed at pre-transfer charging station G', is provided to condition the toner for effective transfer to a substrate using positive corona charge. The pre-transfer corona charging member is preferably an AC corona device biased with a DC voltage to operate in a field sensitive mode and to perform tri-level xerography pre-transfer charging in a way that selectively adds more charge (or at least comparable charge) to the parts of the image that must have their polarity reversed. This charge discrimination may be enhanced by discharging the photoreceptor carrying the composite developed latent image with light before the pre-transfer charging begins. Furthermore, flooding the photoreceptor with light coincident with the pre-transfer charging minimizes the tendency to overcharge portions of the image which are already at the correct polarity

A sheet of support material 70' is moved into contact with the toner image at transfer station H'. The sheet of support material is advanced to transfer station H' by a conventional sheet feeding apparatus, not shown. Preferably, the sheet feeding apparatus includes a feed roll contacting the uppermost sheet of a stack copy sheets. Feed rolls rotate to advance the uppermost sheet from stack into a chute which directs the advancing sheet of support material into contact with photoconductive surface of belt 10' in a timed sequence, so that the developed toner powder image contacts the advancing sheet of support material at transfer station H'.

Transfer station H' includes a corona generating device 72' which sprays ions of a suitable polarity onto the backside of sheet 70'. This attracts the charged toner powder images from the belt 10' to sheet 70'. After transfer, the sheet continues to move, in the direction of arrow 74', onto a conveyor (not shown) which advances the sheet to fusing station I'.

Fusing station I' includes a fuser assembly, indicated generally by the reference numeral 76', which permanently affixes the transferred powder image to sheet 70'. Preferably, fuser assembly 76' comprises a heated fuser roller 78' and a backup roller 80'. Sheet 68' passes between fuser roller 78' and backup roller 80' with the toner powder image contacting fuser roller 78'. In this manner, the toner powder image is permanently affixed to sheet 70'. After fusing, a chute, not shown, guides the advancing sheet 70' to a catch tray, also not shown, for subsequent removal from the printing machine by the operator.

After the sheet of support material is separated from photoconductive surface of belt 10', the residual toner particles carried by the non-image areas on the photoconductive surface are removed therefrom. These particles are removed at cleaning station J'. A magnetic brush cleaner housing is disposed at the cleaner station J'. The cleaner apparatus comprises a conventional magnetic brush roll structure for causing carrier particles in the cleaner housing to form a brush-like orientation relative to the roll structure and the charge retentive surface. It also includes a pair of detoning rolls for removing the residual toner from the brush.

Subsequent to cleaning, a discharge lamp (not shown) floods the photoconductive surface with light to dissipate any residual electrostatic charge remaining prior to the charging thereof for the successive imaging cycle.

The use, in the printing systems shown in Figures 1 and 9, of a plural beam light source with the plural emitted beams sharing the same optical elements in the raster output scanner optical system provides improved pixel placement accuracy upon the photoreceptor belt since common polygon optics are used. Sharing the optical elements also reduces the physical size, the number of optical elements and the costs of the ROS. However, the sharing of optical elements by the plural beams is merely an illustrative example of each xerographic printing system. Each beam could have a separate ROS optical system or just share certain ROS optical elements, like the facet of the rotating polygon mirror.

The substrates of the various photoreceptor belts shown in the drawings can be opaque, translucent, semitransparent, or transparent, and can be of any suitable conductive material, including copper, brass, nickel, zinc, chromium, stainless steel, conductive plastics and rubbers, aluminum, semitransparent aluminum, steel, cadmium, silver, gold, paper rendered conductive by the inclusion of a suitable material therein or through conditioning in a humid atmosphere to ensure the presence of sufficient water content to render the material conductive, indium, tin, metal oxides, including tin oxide and indium tin oxide, and the like. In addition, a substrate can comprise an insulative layer with a conductive coating, such as vacuum-deposited metallized plastic, such as titanized or aluminized Mylar® polyester, wherein the metallized surface is in contact with the bottom photoreceptor layer or any other layer, such as a charge injection blocking or adhesive layer, situated between the substrate and the bottom photoreceptor layer.

Examples of suitable red light sensitive pigments for use in the photoreceptor belts include perylene pigments such as dibromoanthranthrone, crystalline trigonal selenium, betametal free phthalocyanine, azo pigments, benzimidazole perylene (BZP), and the like, as well as mixtures thereof. Examples of suitable infrared sensitive pigments include X-metal free phthalocyanine, metal phthalocyanines such as vanadyl phthalocyanine, chloroindium phthalocyanine, chloroaluminum phthalocyanine, copper phthalocyanine, magnesium phthalocyanine, and the like, titanyl phthalocyanine (TiOPc), squaraines, such as hydroxy squaraine, and the like as well as mixtures thereof. Examples of blue sensitive material are amorphous selenium, methylene blue anthracene and sulphur. Examples of green sensitive material are quinacridene, Se-Te alloys and pigments such as Pigment Red 122 (CI73915). Examples of suitable charge transport materials include diamine molecules, pyrazoline molecules, substituted fluorene molecules, oxadiazole molecules, hydrazone molecules, carbazole phenyl hydrazone molecules, vinyl-aromatic polymers, oxadiazole derivatives, tri-substituted methanes, and 9-fluorenylidene methane derivatives.

The materials usable in the multilayered photoreceptor structures can be greatly expanded by considering not only materials with narrow, well-defined, absorption bands as shown in Figure 4 but by also considering materials with wider absorption bands. The requirement is that each color of laser light discharges only one layer of the photoreceptor. This occurs, for example, if each layer is only accessed by one color of laser light which is achieved if each wavelength is absorbed in a given layer which prevents this light from reaching lower layers which may also be sensitive to that particular wavelength. This general concept is illustrated in Figures 7 and 8. Combinations of the absorption schemes used in Figures 4 and 7 may also be used. For example, the blue, red and IR sensitive layers would have wide absorption bands similiar to those in Figure 7 and the green sensitive layer could have a narrow absorption band as shown in Figure 4. The stacking order of the layers in Figure 8 is important since each wavelength of laser light must be stopped in the layer where it is first absorbed and be prevented from reaching lower layers which are also sensitive to it. If each layer is of the narrow absorption band type as shown in Figure 4, then the order of the layer stacking does not matter.

It should be noted that, in the above description, voltage levels have been refered to as single numbers. In actual practice, certain ranges about the given values will occur and the process latitudes must encompass these ranges. Discrete regularly spaced voltage values have been referred to in order to simplify the discussions, and the actual values given are merely illustrative examples.

Similarly, the wavelengths used are merely illustrative examples. In actual practice, certain wavelength ranges can be used and each wavelength is not restricted to a single color. The only criteria is that the wavelengths be sufficiently separated so that any given photoreceptor layer is sensitive to, or accessible to, only one of the wavelengths or wavelength ranges.

Since the printing technique disclosed herein uses only one imager it offers complete extensibility of system architecture over an entire product line. A low end black and white printer would use a single spot laser diode with a conventional photoreceptor and conventional bi-level xerographic development. Black and white printers of increasing quality/throughput would use dual spot or quad spot laser diodes of a single wavelength, the same single polygon, single optics ROS and a conventional photoreceptor with conventional two level xerographic development. In three color highlight color printers the single polygon, single optics ROS would remain; the single wavelength laser source would be replaced with a dual wavelength laser source and the conventional photoreceptor would be replaced with a two color photoreceptor. Conventional two level xerographic development would be replaced with three level development and three colors would be possible. In four SPOT color printing (red, green, blue and black) a three wavelength laser diode light source would propogate through the same single polygon, single optics ROS. A three color photoreceptor would be used with four level xerographic development. In process color printing (cyan, magenta, yellow, and black) a four wavelength laser diode light source would propogate through the same single polygon, single optics ROS. A four color photoreceptor would be used with multi-level xerographic development. In the case of four color printing with very high quality/throughput the single emitters of each wavelength of the laser light source would be replaced with a dual spot (total of 8 spots) or quad spot (total of 16 spots). Therefor, a common system architecture could be used through an entire product family from low end black and white printing through high volume production color printing.

The multilayer photoreceptor belts used in the described systems can, in the alternative, be drum photoreceptors or other equivalents.

As will be appreciated by those skilled in the art, while conductive magnetic brush development has been disclosed in order to take advantage of its inherent charge neutralization properties, scavengeless or non-interactive development may be employed.

## Claims

1. A xerographic printing system comprising:
a raster output scanner (ROS) optical system (24) for generating a plurality of modulated beams (28,30,32,34) at a plurality of wavelengths, each of said modulated beams having a different wavelength,
a photoreceptor means (10) having a plurality of photoreceptor layers and an outer surface, each layer consisting of a charge generator layer (48,52,56,60) and a charge transport layer (50,54,58,62) and each charge generator layer being sensitive only to one of said plurality of wavelengths, and
xerographic means operable to charge (22) said photoreceptor means, then to expose areas of said photoreceptor means to said plurality of modulated beams, either singularly or in combination, and, after exposure, to deposit (64,70,78,86) a plurality of different colored toners on said photoreceptor means in response to exposure of said areas of said layers to said modulated beams;
characterised in that; the outer surface of the photoreceptor means is uniformly charged once prior to being sequentially exposed by said plurality of modulated beams; each exposure being affected in a predetermined sequential order with each exposure having one or more beams of selected wave lengths;
the transport layers (50, 54, 58, 62) of the photoreceptor means being hole transport layers; and
the deposition of the colored toners being in a predetermined, sequential order following the exposure by the ROS optical scanner to form a composite image on the outer surface of the photoreceptor means, each of the colored toners having good absorption of any beams or light used in subsequent exposure steps; and means (92,96) to transfer the composite image to a sheet of support material (94).

2. A xerographic printing system as claimed in claim 1, wherein said raster output scanner optical system comprises a single rotating polygon (938) and single optical system (44)for said plurality of modulated beams.

3. A xerographic printing system as claimed in any one of the preceding claims, wherein the light source (26)of said raster output scanner optical system comprises a semiconductor laser structure for emitting said plurality of modulated beams at a plurality of wavelengths.

4. A xeorgraphic printing system as claimed in any one of claims 1 to 3, wherein one at least of said layers is sensitive to more than one of said plurality of wavelengths but is accessible to only one of said wavelengths.

5. A xeorgraphic printing system as claimed in any one of the preceding claims, wherein said raster output scanner optical system is operable to generate four modulated beams at four different wavelengths, and said photoreceptor means has four photoreceptor layers.

6. A xerographic printing system as claimed in claim 5, wherein the photoreceptor layers are sensitive to, or accessible to, wavelengths in the infrared, red, green and blue ranges, respectively.

7. A xerographic printing system as claimed in any one of claims 1 to 4, wherein said raster output scanner system (24') is operable to generate two modulated beams (34',36')at two different wavelengths, and said photoreceptor means has two photoreceptor layers, each consisting of a charge generator layer (40',44') and a charge transport layer (42',46').

8. A xerographic printing system as claimed in claim 7, wherein the photoreceptor charge generator layers are sensitive to, or accessible to, wavelengths in the infrared and red ranges, respectively.

9. A xerographic printing system as claimed in any one of the preceding claims, in which the xerographic means is operable to expose the photoreceptor means to blanket radiation (60',68',76,84) following the deposition of one of said plurality of toners, thereby to change voltage levels in certain areas of the photoreceptor means exposed to at least one of the said plurality of modulated beams and allow subsequent toner deposition in only one of the said areas.

## Patentansprüche

1. Xerografisches Drucksystem mit:
einem Rasterausgabescanner-(ROS)-Optiksystem (24) zum Erzeugen mehrerer modulierter Strahlen (28,30,32,34) mit mehreren Wellenlängen, wobei jeder der modulierten Strahlen eine andere Wellenlänge aufweist,
einer Fotorezeptoreinrichtung (10) mit mehreren Fotorezeptorschichten und einer äußeren Oberfläche, wobei jede Schicht aus einer Ladungserzeugerschicht (48,52,56,60) und einer Ladungstransportschicht (50,54,58,62) besteht, und wobei jede Ladungserzeugerschicht nur für eine der Wellenlängen empfindlich ist, und
einer xerografischen Einrichtung, die betrieben werden kann, um die Fotorezeptoreinrichtung aufzuladen (22), um dann die Bereiche der Fotorezeptoreinrichtung mit den modulierten Strahlen entweder einzeln oder in Kombination zu belichten, und um nach der Belichtung mehrere verschiedenfarbige Toner auf die Fotorezeptoreinrichtung in Übereinstimmung mit der Belichtung der Bereiche der Schichten durch die modulierten Strahlen aufzutragen (64,70,78,86),
dadurch gekennzeichnet, daß die äußere Oberfläche der Fotorezeptoreinrichtung einmal gleichmäßig aufgeladen wird, bevor sie sequentiell durch die modulierten Strahlen belichtet wird, wobei jede Belichtung in einer sequentiellen Abfolge mit nur einem oder mehreren Lichtstrahlen selektiver Wellenlänge ausgeführt wird,
die Transportschichten (50,54,58,62) der Fotorezeptoreinrichtung löchertransportierende Schichten sind, und
das Auftragen der Farbtoner in einer vorbestimmten, sequentiellen Abfolge nach der Belichtung durch den optischen Scanner des ROS ausgeführt wird, um ein zusammengesetztes Bild auf der äußeren Oberfläche der Fotorezeptoreinrichtung zu bilden, wobei jeder der Farbtoner eine gute Absorption für einen der in aufeinander folgenden Belichtungsschritten verwendeten Lichtstrahlen aufweist, und wobei eine Einrichtung (92,96) vorgesehen ist, um das zusammengesetzte Bild auf einen Bogen aus Trägermaterial (94) zu übertragen.

2. Xerografisches Drucksystem nach Anspruch 1, wobei das Rasterausgabescanner-Optiksystem einen einzigen rotierenden Polygonspiegel (38) und ein einziges optisches System (44) für die Vielzahl modulierter Strahlen aufweist.

3. Xerografisches Drucksystem nach wenigstens einem der vorstehenden Ansprüche, wobei die Lichtquelle (26) des Rasterausgabescanner-Optiksystems eine Halbleiterlaserstruktur für das Emittieren der Vielzahl modulierter Strahlen mit einer Vielzahl von Wellenlängen aufweist.

4. Xerografisches Drucksystem nach wenigstens einem der vorstehenden Ansprüche 1 bis 3, wobei wenigstens eine der Schichten für mehr als eine der Mehrzahl von Wellenlängen empfindlich ist, aber nur für eine der Wellenlängen zugänglich ist.

5. Xerografisches Drucksystem nach wenigstens einem der vorstehenden Ansprüche, wobei das Rasterausgabescanner-Optiksystem betrieben werden kann, um vier modulierte Strahlen mit vier verschiedenen Wellenlängen zu erzeugen, und wobei die Fotorezeptoreinrichtung vier Fotorezeptorschichten aufweist.

6. Xerografisches Drucksystem nach Anspruch 5, wobei die Fotorezeptorschichten jeweils für Wellenlängen in infraroten, roten, grünen und blauen Bereichen empfindlich oder zugänglich sind.

7. Xerografisches Drucksystem nach wenigstens einem der vorstehenden Ansprüche 1 bis 4, wobei das Rasterausgabescanner-Optiksystem (24') betrieben werden kann, um zwei modulierte Strahlen (34',36') mit zwei verschiedenen Wellenlängen zu erzeugen, und wobei die Fotorezeptoreinrichtung zwei Fotorezeptorschichten aufweist, die jeweils aus einer Ladungserzeugerschicht (40',44') und einer Ladungstransportschicht (42',46') bestehen.

8. Xerografisches Drucksystem nach Anspruch 7, wobei die Fotorezeptorschichten jeweils für Wellenlängen in den infraroten und roten Bereichen empfindlich oder zugänglich sind.

9. Xerografisches Drucksystem nach wenigstens einem der vorstehenden Ansprüche, wobei die xerografische Einrichtung betrieben werden kann, um die Fotorezeptoreinrichtung mit einer Pauschalbelichtung (60',68',76,84) nach dem Auftragen eines aus der Vielzahl von Tonern zu belichten, wodurch die Spannungstufen in bestimmten Bereichen der Fotorezeptoreinrichtung zu ändern, die durch wenigstens einem aus der Vielzahl modulierter Strahlen belichtet sind, und um ein darauf folgendes Auftragen von Toner in nur einem dieser Bereiche zu gestatten.

## Revendications

1. Système d'impression xérographique comprenant :
un système (24) optique de sortie à balayage récurrent (ROS) pour produire une pluralité de faisceaux (28,30,32,34) modulés à une pluralité de longueurs d'onde, chacun desdits faisceaux modulés ayant une longueur d'onde différente,
des moyens (10) photorécepteurs ayant une pluralité de couches photoconductrices et une surface extérieure, chaque couche étant constituée d'une couche (48,52,66,60) génératrice de charge et d'une couche (50,54,58,62) de transport de charge, et chaque couche génératrice de charge n'étant sensible qu'à l'une de ladite pluralité de longueurs d'onde, et
des moyens xérographiques ayant pour fonction de charger (22) lesdits moyens photorécepteurs, puis d'exposer des zones desdits moyens photoconducteurs à ladite pluralité de faisceaux modulés, soit de façon unique, soit en combinaison, et, après exposition, de déposer (64,70,78,86) une pluralité de toners colorés différents sur lesdits moyens photorécepteurs en réponse à l'exposition desdites zones desdites couches auxdits faisceaux modulés ;
caractérisé en ce que : la surface extérieure des moyens photorécepteurs est uniformément chargée une fois avant d'être séquentiellement exposée à ladite pluralité de faisceaux modulés ; chaque exposition étant effectuée selon un ordre séquentiel prédéterminé et chaque exposition ayant un ou plusieurs faisceaux de longueurs d'onde sélectionnées ;
les couches de transport (50,54,58,67) des moyens photorécepteurs étant des couches de transport de trous ; et
le dépôt des toners colorés s'effectuant dans un ordre séquentiel prédéterminé après l'exposition par le dispositif de balayage optique ROS afin de former une image composite sur la surface extérieure des moyens photorécepteurs, chacun des toners colorés ayant une bonne absorption de l'un quelconque des faisceaux ou des lumières utilisées lors des étapes d'exposition ultérieures ; et des moyens (92,96) pour transférer l'image composite sur une feuille de matériau (94) de support.

2. Système d'impression xérographique suivant la revendication 1, dans lequel ledit système optique de sortie à balayage récurrent comprend un seul polygone (938) rotatif et un seul système (44) optique pour ladite pluralité de faisceaux modulés.

3. Système d'impression xérographique suivant l'une quelconque des revendications précédentes, dans lequel la source (26) lumineuse dudit système optique de sortie à balayage récurrent comprend une structure laser pour émettre ladite pluralité de faisceaux modulés à une pluralité de longueurs d'onde.

4. Système d'impression xérographique suivant l'une quelconque des revendications 1 à 3, dans lequel au moins l'une desdites couches est sensible à plus d'une de ladite pluralité de longueurs d'onde mais est accessible à seulement l'une desdites longueurs d'onde.

5. Système d'impression xérographique suivant l'une quelconque des revendications précédentes, dans lequel ledit système optique de sortie à balayage récurrent peut avoir pour fonction de produire quatre faisceaux modulés à quatre longueurs d'onde différentes, et lesdits moyens photorécepteurs comportent quatre couches photoréceptrices.

6. Système d'impression xérographique suivant la revendication 5, dans lequel les couches photoréceptrices sont sensibles ou accessibles à des longueurs d'onde se situant respectivement dans l'infrarouge, le rouge, le vert et le bleu.

7. Système d'impression xérographique suivant l'une quelconque des revendications 1 à 4, dans lequel ledit système (24') de sortie à balayage récurrent peut avoir pour fonction de produire deux faisceaux (34',36') modulés à deux longueurs d'onde différentes, et lesdits moyens photorécepteurs ont deux couches photoréceptrices, chacune constituée d'une couche (40',44') génératrice de charge et d'une couche (42',46') de transport de charge.

8. Système d'impression xérographique suivant la revendication 7, dans lequel les couches génératrices de charge photoréceptrices sont sensibles ou accessibles à des longueurs d'onde se situant respectivement dans les gammes infrarouge et rouge.

9. Système d'impression xérographique suivant l'une quelconque des revendications précédentes, dans lequel les moyens xérographiques peuvent avoir pour fonction d'exposer les moyens photorécepteurs à un rayonnement (60',68',76,84) uniforme après le dépôt de l'un de ladite pluralité de toners, afin de modifier les niveaux de tension dans certaines zones des moyens photorécepteurs qui sont exposées à au moins l'un de ladite pluralité de faisceaux modulés et afin de permettre le dépôt ultérieur de toner que dans une seule desdites zones.
